(19) **Europäisches Patentamt / European Patent Office / Office européen des brevets**

(11) **EP 4 184 413 A1**

(12) # EUROPEAN PATENT APPLICATION
published in accordance with Art. 153(4) EPC

(43) Date of publication:
**24.05.2023 Bulletin 2023/21**

(21) Application number: **21845812.3**

(22) Date of filing: **21.07.2021**

(51) International Patent Classification (IPC):
$G06Q\ 30/06$ (2023.01)    $G06F\ 16/535$ (2019.01)
$G06F\ 16/9535$ (2019.01)    $G06F\ 16/538$ (2019.01)
$G06T\ 7/90$ (2017.01)    $G06T\ 11/00$ (2006.01)

(86) International application number:
**PCT/KR2021/009428**

(87) International publication number:
**WO 2022/019654 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.07.2020 KR 20200091772**

(71) Applicant: **Urbanbase Inc.**
**Seoul 06614 (KR)**

(72) Inventors:
• **KIM, Soo Min**
  **Seoul 03916 (KR)**
• **YUN, Dae Hee**
  **Seoul 02008 (KR)**

(74) Representative: **BCKIP Part mbB**
**Siegfriedstraße 8**
**80803 München (DE)**

(54) **SPATIAL IMAGE ANALYSIS-BASED COLOR SCHEME RECOMMENDATION APPARATUS AND METHOD**

(57) Disclosed is an apparatus for recommending a color combination based on analysis of a space image, including a processor performing receiving a space image, determining a type of a color configuring the space image and a ratio in which the type of the color is used in the space image, selecting a first color as a part of the color configuring the space image in order of increasing the ratio of the color used in the space image, determining an element value in which each of the first colors is positioned on a predetermined color image scale using soft and dynamic elements, calculating a combined color combination element value by weighting the element value of each of the first colors using the ratio of each of the first colors used in the space image as a weight, and recommending a color combination group including a color combination element value on the color image scale as a color combination suitable for a space image.

Fig.3

**Description**

**TECHNICAL FIELD**

The present disclosure relates to an apparatus and method for recommending color combination based on analysis of a space image.

**BACKGROUND**

According to the Korea Internet & Security Agency (KISA), the size of a domestic online shopping market aggregated in 2019 is about 133 trillion won, showing a growth of about 20% compared to 111 trillion won in 2018. As a growth rate of the online shopping market increases sharply, the number of stores and products registered on an online shopping platform is rapidly increasing, and a ratio of consumers purchasing products through online stores rather than offline stores is increasing significantly.

In the form of offline shopping, a consumer selects a store and visually checks products provided in the store to purchase a favorite product, whereas in the form of online shopping, consumers search for and purchase a product through keywords of a desired product, and as a platform on which products are sold changes, the form in which consumers find a product is also changing.

Therefore, in online shopping, it is becoming very important to well set keywords related to products so as to introduce traffic of consumers to product pages. However, it is difficult to set keywords for each product in a situation where there are more than 400 million products uploaded to the top 10 online shopping malls in Korea, and accordingly, there is a demand for a solution with a function to set keywords for a product only with an image file of the product or a function to recommend products that a user is expected to want only with an image file containing information presented by the user (e.g., an image taken from a space) in an online shopping mall.

In particular, in an interior field, objects constituting a space, such as wallpaper, landscape, or objects have respective colors, and the color harmony of these objects is one of important factors determining a good interior. Accordingly, when a user desires to purchase a specific product, there is a need for a technology for determining whether the product is suitable for a space of a user according to color of the product and recommending the product.

In addition, when recommending the color of the product to the user, if a new product is recommended with the same color as color already used in the space of the user, the new product may give a monotonous feeling, and accordingly, there is a need for technology for recommending products with color combination that gives a feeling of matching even if the color is not already used in the space.

**SUMMARY**

An object of an embodiment of the present disclosure is to provide a technology of recommending a color combination suitable for a specific image by analyzing colors included in the corresponding image.

In this case, an embodiment of the present disclosure proposes a technology for determining a soft value and a dynamic value for main colors configuring an input image and selecting a color combination using a combined value on a color image scale as an element by combining the soft value and the dynamic value when colors suitable for an input image are recommended.

In addition, an embodiment of the present disclosure proposes a technology for generating a color image scale DB from data formed by collecting information on colors mainly used on the web.

However, the technical problems solved by the embodiments may not be limited to the above technical problems and may be variously expanded without are departing from the spirit and scope of the present disclosure.

According to an embodiment of the present disclosure, an apparatus for recommending a color combination based on analysis of a space image includes one or more memories configured to store commands for performing a predetermined operation, and one or more processors operatively connected to the one or more memories and configured to execute the commands, wherein an operation perform by the processor includes receiving a space image, determining a type of a color configuring the space image and a ratio in which the type of the color is used in the space image, selecting a first color as a part of the color configuring the space image in order of increasing the ratio of the color used in the space image, determining an element value in which each of the first colors is positioned on a predetermined color image scale using soft and dynamic elements, calculating a combined color combination element value by weighting the element value of each of the first colors using the ratio of each of the first colors used in the space image as a weight, and recommending a color combination group including the color combination element value on the color image scale as a color combination suitable for the space image.

The operation performed by the processor may further include generating the color image scale, and the generating the color image scale may include acquiring a color palette including P (P being a natural number) colors,

classifying colors based on RGB information of the P colors to cluster U (U being a natural number less than P) groups, calculating a median value of RGB information of colors included in the group based on the RGB information and selecting a color closest to the median value of the RGB information of the colors included in the group as a leader color of the group, determining a soft value and a dynamic value of the leader color based on RGB information of the leader color, determining a soft value and a dynamic value of colors of the same group as the leader color by adding or subtracting a preset value to the soft value and dynamic value of the leader color, and generating a color combination group by classifying a soft value and a dynamic value determined for the P colors according to a predetermined range. The P may be 275 and the U may be 32.

The determining the ratio may include determining the type of the color configuring the space image and the ratio in which each type of the color is used in the space image by analyzing the space image based on a k-means clustering algorithm.

The selecting the first color may include selecting n (n being a natural number) colors configuring the space image in order of increasing the ratio of the color used in the space image, and selecting color until a cumulative ratio of color obtained by accumulating colors in order of increasing a ratio of colors among the n colors exceeds a% (a being a natural number less than or equal to 100) as the color. The n may be 5 and the a% may be 70%.

The calculating the color combination element value includes calculating the color combination element value by applying a weighted arithmetic mean to the element value of each of the first colors using a ratio of each of the first colors used in the space image as a weight.

The calculating the color combination element value may include calculating the color combination element value by applying a weighted arithmetic mean to a two-dimensional element value of each of the first colors using a ratio derived when converting a sum of ratios used in each of the first colors in the space image to 100% as a weight for each of the first colors.

The calculating the color combination element value may include calculating the color combination element value using Equation 1 below.

[Equation 1]

$$S_{av} = \sum_{k=1}^{N} \frac{a_k \times S_k}{100} \quad (a_1 + a_2 + ... + a_n = 100)$$

$$D_{av} = \sum_{k=1}^{N} \frac{a_k \times D_k}{100} \quad (a_1 + a_2 + ... + a_n = 100)$$

where N = number of first colors, a = ratio of using one first color when converting the sum of ratios of N first colors used in a space image to 100%, S: soft element value, D: dynamic element value, $S_{av}$: weighted arithmetic mean element value for soft values of first colors, and $D_{av}$: weighted arithmetic mean element value for dynamic values of first colors

According to an embodiment of the present disclosure, a method of recommending a color combination based on analysis of a space image includes receiving a space image, determining a type of a color configuring the space image and a ratio in which the type of the color is used in the space image, selecting a first color as a part of the color configuring the space image in order of increasing the ratio of the color used in the space image, determining an element value in which each of the first colors is positioned on a predetermined color image scale using soft and dynamic elements, calculating a combined color combination element value by weighting the element value of each of the first colors using the ratio of each of the first colors used in the space image as a weight, and recommending a color combination group including a color combination element value on the color image scale as a color combination suitable for a space image.

## BRIEF DESCRIPTION OF THE DRAWINGS

FIG. 1 is a diagram showing a function of determining a type and ratio of colors included in a space image using a space image analysis-based color combination recommending apparatus according to an embodiment of the present disclosure.

FIG. 2 is a functional block diagram of a space image analysis-based color combination recommending apparatus according to an embodiment of the present disclosure.

FIG. 3 is an exemplary diagram for explaining an operation of extracting five colors and usage ratios mainly used for a space image by a space image analysis-based color combination recommending apparatus according to an embodiment of the present disclosure.

FIG. 4 is an exemplary diagram of a color image scale in which colors are arranged in a two-dimensional coordinate plane with soft and dynamic axes.

FIG. 5 is an exemplary diagram of groups classified based on ranges of soft values and dynamic values for colors on a color image scale.

FIG. 6 is an exemplary diagram in which colors included in a color palette are arranged on a three-dimensional coordinate plane with R, G, and B as axes.

FIG. 7 is a flowchart of a color combination recommendation method based on analysis of a space image according to an embodiment of the present disclosure.


## DETAILED DESCRIPTION

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

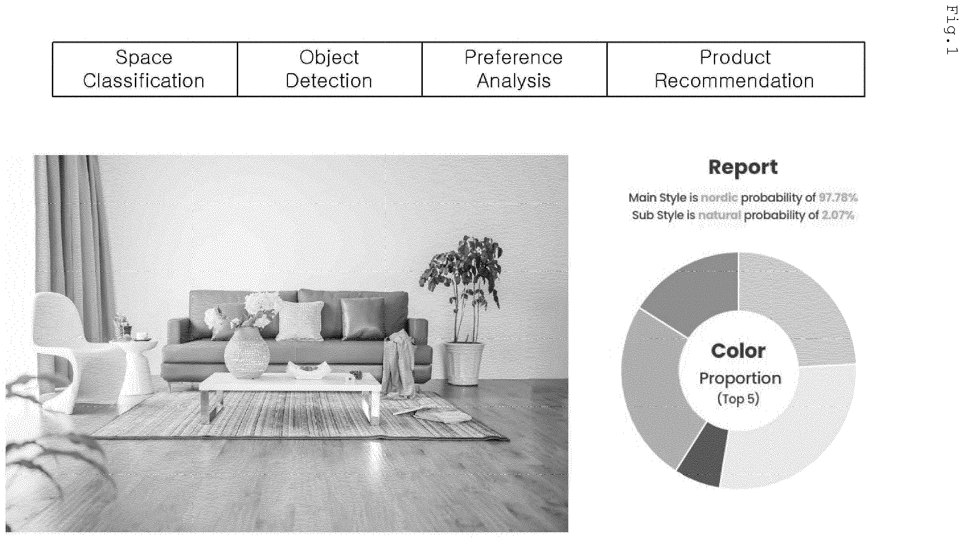

FIG. 1 is a diagram showing a function of determining a type and ratio of colors included in a space image using a space image analysis-based color combination recommending apparatus 100 according to an embodiment of the present disclosure.

Referring to FIG. 1, the space image analysis-based color combination recommending apparatus 100 according to an embodiment of the present disclosure may provide a color combination recommendation function among spatial analysis, object analysis, style analysis, and color combination recommendation functions of an upper menu of an interface shown in FIG. 1. The space image analysis-based color combination recommending apparatus 100 may analyze and output a color and ratio included in a specific image (e.g., a space image including objects arranged in a predetermined space) and may further recommend a color combination suitable for the image. The literal meaning of the color combination means weaving of colors, and the color combination provided by the embodiment of the present disclosure means proposal of not only color already used in an image input by the space image analysis-based color combination recommending apparatus 100 but also color that is not used in the input image while giving a harmonious feeling with the color used in the input image.

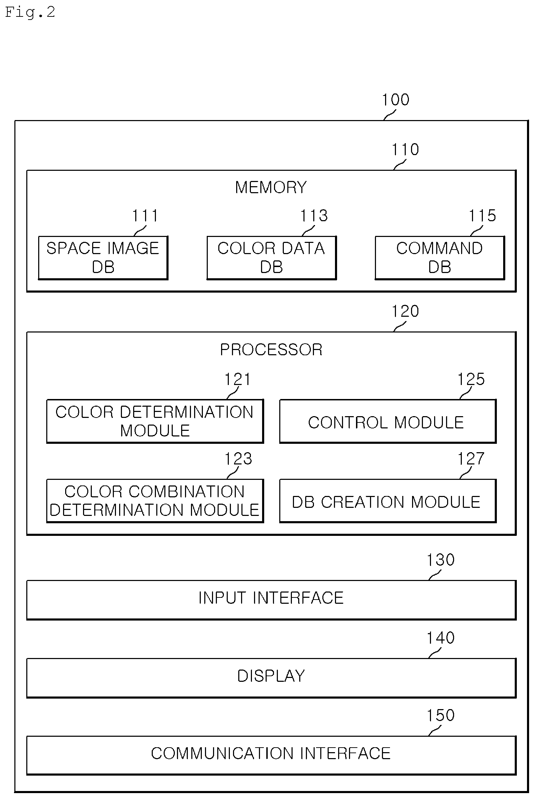

FIG. 2 is a functional block diagram of the space image analysis-based color combination recommending apparatus 100 according to an embodiment of the present disclosure.

Referring to FIG. 2, the space image analysis-based color combination recommending apparatus 100 according to an embodiment may include a memory 110, a processor 120, an input interface 130, a display 140 and a communication interface 150.

The memory 110 may include a space image DB 111, a color data DB 113, and a command DB 115.

The space image DB 111 may include a space image file including objects arranged in a predetermined space. A space image may be acquired through an external server or an external DB or may be acquired from the Internet. In this case, the space image may include a plurality of pixels (e.g., M*N pixels in the form of M horizontal and N vertical matrix), and each pixel may include pixel information including RGB element values (x, y, z) representing unique color of R(Red), G(Green), and B(Blue).

The color data DB 113 may include a color palette including RGB information for a plurality of colors and a color image scale for classifying colors according to various element values (e.g., soft, dynamic, brightness, saturation, color, etc.).

The command DB 115 may store commands for performing an operation of the processor 120. For example, the command DB 115 may store a computer code for performing operations corresponding to the following operations of the processor 120.

The processor 120 may control the overall operation of components included in the space image analysis-based color combination recommending apparatus 100, the memory 110, the input interface 130, the display 140, and the communication interface 150. The processor 120 may include a color determination module 121, a color combination determination module 123, a control module 125, and a DB creation module 127. The processor 120 may execute commands stored in the memory 110 to drive the color determination module 121, the color combination determination module 123, the control module 125, and the DB creation module 127, and an operation performed by the color determination module 121, the color combination determination module 123, the control module 125, and the DB creation module 127 may be understood as an operation performed by the processor 120.

The color determination module 121 may determine a type of color configuring a space image input for recommending color combination and may determine a ratio in which each type of color configuring the space image is used. For example, the color determination module 121 may determine the types of colors configuring the space image and ratios in which the types of the colors are used in the space image using a k-means clustering algorithm (Reference: https://en.wikipedia.org/wiki/K-means_clustering), but the embodiment of the present disclosure is not limited to the exemplified algorithm.

When there are very many colors configuring the space image, if an operation is performed to determine a color combination suitable for all types of colors configuring the space image, it may take a long time because calculation is required for all colors, and it may be inefficient because the operation is performed even on colors included in a very low ratio. Therefore, the color determination module 121 may select some of the colors configuring the space image in order of increasing a ratio of colors used in the space image as a main color to be used for calculation (hereinafter referred to as 'the first color') in order to select the main color to be used for recommending color combination.

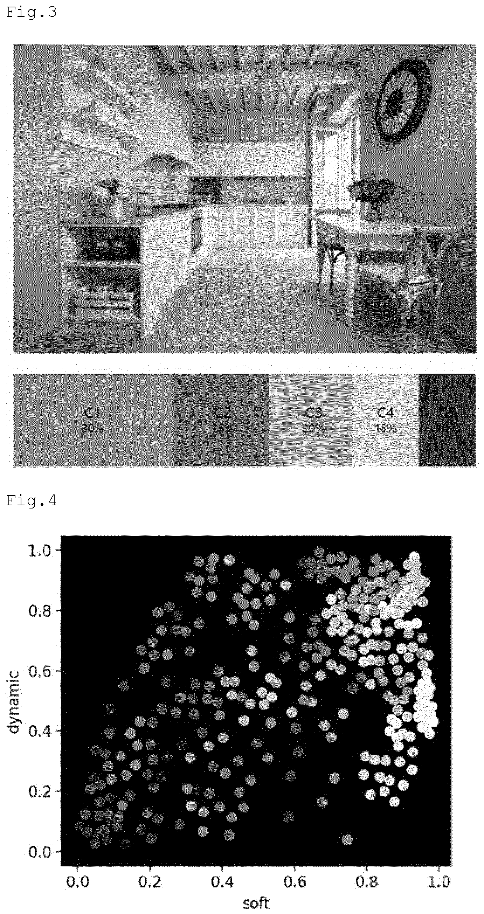

FIG. 3 is an exemplary diagram for explaining an operation of extracting five colors and usage ratios mainly used for a space image by a space image analysis-based color combination recommending apparatus according to an embodiment of the present disclosure.

Referring to FIG. 3, the color determination module 121 may select n colors configuring a space image in order of increasing a ratio of colors used in the space image. As an example of n = 5 in the case of FIG. 3, the color determination module 121 may convert the sum of the ratios of each of the five colors used in the space image to 100%. (In the case of FIG. 3, C1 color: 30%, C2 color: 25%, C3 color: 20%, C4 color: 15%, C5 color: 10%)

In this case, the color determination module 121 may select color until a cumulative ratio of color obtained by accumulating colors in order of increasing a ratio of colors among the five colors of C1 to C5 exceeds a% (a is a natural number less than or equal to 100) as a first color. For example, when a% is 70%, when ratios of colors C1, C2, and C3 are added up, the cumulative ratio exceeds 70%, and thus the first color may be selected as C1, C2, and C3.

The color combination determination module 123 may determine the position of the first color on a predetermined color image scale using soft and dynamic elements based on RGB information of each of the selected first colors to determine the soft element value of the first color and the dynamic element value of the color.

FIG. 4 is an exemplary diagram of a color image scale in which colors are arranged in a two-dimensional coordinate plane with soft and dynamic axes.

The color image scale is a graph for expressing colors with matching color combinations to be located close together, and is a graph in which colors are classified based on a dynamic value indicating a scale according to whether the color is dynamic or static and a soft value indicating a scale according to whether the color is soft or hard. The color combination determination module 123 may determine coordinates at which color having RGB information of the closest numerical value to the first color is located on the color image scale based on the RGB information of the first color to determine a soft element of the first color and a dynamic element value of the color. The embodiment of the present disclosure may use various color image scales, but may propose a method of generating a color image scale based on colors mainly used on the Web in the part to be described later with regard to the DB creation module 127.

The control module 125 may calculate a color combination element value, which is a coordinate at which a color combination most suitable for a space image is located on the color image scale, based on the element value on the color image scale of each first color.

In this case, the control module 125 may calculate a color combination element value combined by applying a weight to each element value of the first color using a ratio of each first color used in the space image as a weight. In an embodiment in which each element value is weighted and combined, various methods such as a median value, an average value, and a vector sum may be realized, for example, a weighted arithmetic average may be applied.

For example, the control module 125 may calculate a color combination element value by applying a weighted arithmetic mean to a two-dimensional element value of each first color as shown in Equation 1 below using a ratio derived when converting the sum of ratios used in each of the first colors in the space image to 100% as a weight for each of the first colors.

[Equation 1]

$$S_{av} = \sum_{k=1}^{N} \frac{a_k \times S_k}{100} \quad (a_1 + a_2 + \ldots + a_n = 100)$$

$$D_{av} = \sum_{k=1}^{N} \frac{a_k \times D_k}{100} \quad (a_1 + a_2 + \ldots + a_n = 100)$$

(N = number of first colors, a = ratio of using a specific first color when converting the sum of ratios of N first colors used in a space image to 100%, S: soft element value, D: dynamic element value, $S_{av}$: weighted arithmetic mean element value for soft values of first colors, $D_{av}$: weighted arithmetic mean element value for dynamic values of first colors)

An example of applying Equation 1 to the example of FIG. 3 will be described. The ratios of C1, C2, and C3 selected as the first colors in FIG. 3 used in the space image are C1: 30%, C2: 25%, and C3: 20%. In this case, if the sum of each ratio is converted to 100%,

$$C1: \frac{30}{30+25+20} \times 100 = 40\%$$

$$C2: \frac{25}{30+25+20} \times 100 = 33.3\%$$

$$C3: \frac{20}{30+25+20} \times 100 = 26.7\%$$

In this case, it may be assumed that coordinates of C1 on the color image scale (S-axis, D-axis) are (S1, D1) = (0.5, 0.4), that coordinates of C2 are (S2, D2) = (0.4, 0,3), and coordinates of C3 are (S3, D3) = (0.3, 0.2).

In this case, when Equation 1 is applied, a color combination element value ($S_{av}$, $D_{av}$) may be calculated to (0.4133, 0.3133) as follows.

$$S_{av} = (\frac{40 \times 0.5}{100}) + (\frac{33.3 \times 0.4}{100}) + (\frac{26.7 \times 0.3}{100}) = 0.4133$$

$$D_{av} = (\frac{40 \times 0.4}{100}) + (\frac{33.3 \times 0.3}{100}) + (\frac{26.7 \times 0.2}{100}) = 0.3133$$

The control module 125 may recommend a color combination group including the color combination element value calculated on the color image scale as a color combination suitable for the space image.

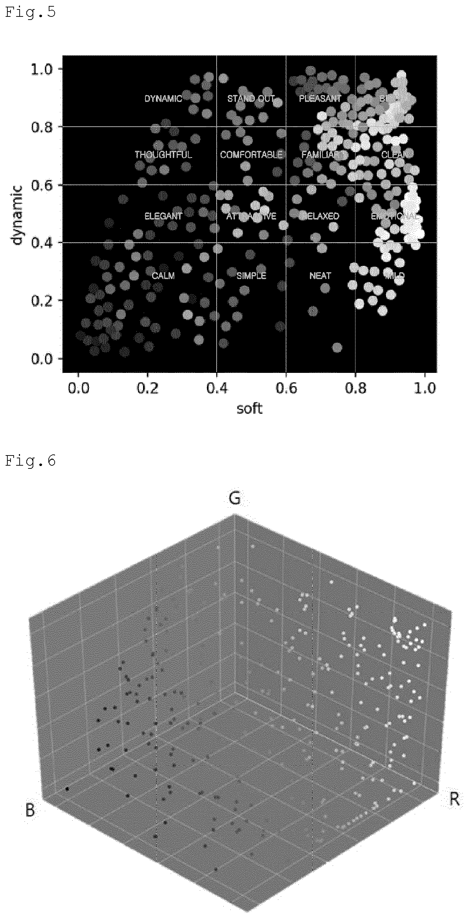

FIG. 5 is an exemplary diagram of groups classified based on ranges of soft values and dynamic values for colors on a color image scale.

Referring to FIG. 5, when the example of FIG. 3 is applied, color combination element values (0.4133, 0.3133) for FIG. 3 are located in a "simple" color combination group located in a soft range 0.4 to 0.6 and a dynamic range 0.0 to 0.4. Accordingly, the control module 125 may recommend a color belonging to the "simple" color combination group on the color image scale as a color combination suitable for the space image.

The DB creation module 127 may create a color image scale based on colors mainly used on the web.

For example, the DB creation module 127 may obtain a color palette including 275 colors. The DB creation module 127 may use HTML color palette or JavaScript color palette to use frequently used colors on the web.

Then, the DB creation module 127 needs to determine soft and dynamic values for 275 colors, and in order to efficiently calculate values, the DB creation module 127 may first classify colors based on RGB information of 275 colors to cluster 32 groups. The DB creation module 127 may place colors on the RGB three-dimensional coordinate plane as shown in FIG. 6 based on RGB information of 275 colors, and classify the colors into 32 groups with close colors based on a distance between colors located in the three-dimensional space.

Then, the DB creation module 127 may calculate the median or average value of RGB information based on RGB information of colors included in the group, and select the color closest to the median or average value of RGB information among colors included in the group as a leader color of the group.

Accordingly, the DB creation module 127 may determine a soft value and dynamic value of the leader color based on RGB information only for the leader color of each group. After the determination, the DB creation module 127 may determine the soft value and dynamic value of colors in the same group by adding or subtracting a preset value to the soft value and dynamic value of the leader color based on a difference between the RGB information of the leader color and other colors belonging to the same group as the leader color.

Accordingly, the DB creation module 127 may create a color-based color image scale mainly used on the web by placing soft and dynamic values on the axis based on the soft and dynamic values determined for 275 colors and may create a color combination group as shown in FIG. 4 by classifying the soft value and the dynamic value according to a predetermined range. The 275 colors and 32 groups exemplified above are merely examples, and various colors may be used depending on the implementation method, and the embodiment may be implemented by classifying the colors into a smaller number of groups than the colors used.

The input interface 130 may obtain data input by a user or data on the web, and may receive a space image for an operation of the processor 120. The data may include an image for objects arranged in a predetermined space, a space image including RGB information of pixels configuring the image, a color palette including RGB information for a plurality of colors, and a plurality of color image scales for classifying colors according to a predetermined element value (e.g., soft, dynamic, brightness, and saturation, color).

The display 140 may include a hardware component for outputting an image as well as a display panel.

The communication interface 150 may communicate with an external device (e.g., an online shopping mall server or a user terminal) to transmit and receive information. To this end, the communication interface 150 may include a wireless communication module or a wired communication module.

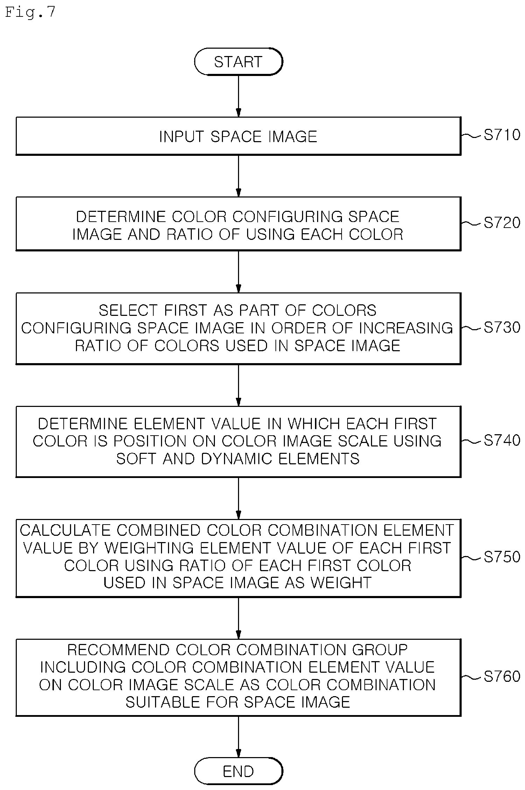

FIG. 7 is a flowchart of a color combination recommendation method based on analysis of a space image according to an embodiment of the present disclosure. Each step of the color combination recommendation method based on analysis of a space image in FIG. 7 may be performed by the space image analysis-based color combination recommending apparatus 100 described with reference to FIG. 2, and each step will described as follows.

Referring to FIG. 7, the input interface 130 may receive a space image (S710). Then, the color determination module 121 may determine types of colors configuring the space image and a ratio of each type of color used in the space image (S720), and select a first color that is a part of the colors configuring the space image in order of increasing the ratio of colors used in the space image (S730). Then, the color combination determination module 123 may determine an element value in which each of the first colors is positioned on a predetermined color image scale using soft and dynamic elements (S740). Accordingly, the control module 125 may calculate the combined color combination element value by weighting the element value of each first color using the ratio of each first color used in the space image as a weight (S750), and recommend a color combination group including a color combination element value on the color image scale as a color combination suitable for a space image (S760). In addition, the DB creation module 127 may create a color image scale based on a color palette on the web.

Since the procedure for performing corresponding operations by components as subjects of the respective operations described above has been described above with reference to FIGS. 1 to 6, a repeated description will be omitted.

According to the present disclosure, a color included in a specific image may be analyzed to recommend a color combination suitable for the image. Accordingly, when the present technology is used as a solution for an online shopping mall, the online shopping mall may recommend a color combination of products suitable for a space of a user. In addition, a color combination of not only colors already used in the space of the user but also various colors for giving a more harmonious feeling may be recommended.

Various effects that are directly or indirectly identified through the present disclosure may be provided.

The embodiments of the present disclosure may be achieved by various means, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs ), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

Combinations of blocks in the block diagram attached to the present disclosure and combinations of operations in the flowchart attached to the present disclosure may be performed by computer program instructions. These computer program instructions may be installed in an encoding processor of a general purpose computer, a special purpose computer, or other programmable data processing equipment, and thus the instructions executed by an encoding processor of a computer or other programmable data processing equipment may create means for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing instruction means for performing the functions of the blocks of the block diagram or the operations of the flowchart. The computer program instructions may also be mounted on a computer or other programmable data processing equipment, and thus a series of operations may be performed on the computer or other programmable data processing equipment to create a computer-executed process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1. An apparatus for recommending a color combination based on analysis of a space image, the apparatus comprising:

   one or more memories configured to store commands for performing a predetermined operation; and
   one or more processors operatively connected to the one or more memories and configured to execute the commands,
   wherein an operation perform by the processor includes:

   receiving a space image;
   determining a type of a color configuring the space image and a ratio in which the type of the color is used in the space image;
   selecting a first color as a part of the color configuring the space image in order of increasing the ratio of the color used in the space image;
   determining an element value in which each of the first colors is positioned on a predetermined color image scale using soft and dynamic elements;
   calculating a combined color combination element value by weighting the element value of each of the first colors using the ratio of each of the first colors used in the space image as a weight; and
   recommending a color combination group including the color combination element value on the color image scale as a color combination suitable for the space image.

2. The apparatus of claim 1, wherein the operation performed by the processor further includes generating the color image scale, and
   wherein the generating the color image scale includes:

   acquiring a color palette including P (P being a natural number) colors;
   classifying colors based on RGB information of the P colors to cluster U (U being a natural number less than P) groups;
   calculating a median value of RGB information of colors included in the group based on the RGB information and selecting a color closest to the median value of the RGB information of the colors included in the group as

8

a leader color of the group;
determining a soft value and a dynamic value of the leader color based on RGB information of the leader color;
determining a soft value and a dynamic value of colors of the same group as the leader color by adding or subtracting a preset value to the soft value and dynamic value of the leader color; and
generating a color combination group by classifying a soft value and a dynamic value determined for the P colors according to a predetermined range.

3. The apparatus of claim 2, wherein the P is 275, the U is 32.

4. The apparatus of claim 1, wherein the determining the ratio includes determining the type of the color configuring the space image and the ratio in which each type of the color is used in the space image by analyzing the space image based on a k-means clustering algorithm.

5. The apparatus of claim 1, wherein the selecting the first color includes:

selecting n (n being a natural number) colors configuring the space image in order of increasing the ratio of the color used in the space image; and
selecting color until a cumulative ratio of color obtained by accumulating colors in order of increasing a ratio of colors among the n colors exceeds a% (a being a natural number less than or equal to 100) as the color.

6. The apparatus of claim 5, wherein the n is 5, and the a% is 70%.

7. The apparatus of claim 1, wherein the calculating the color combination element value includes calculating the color combination element value by applying a weighted arithmetic mean to the element value of each of the first colors using a ratio of each of the first colors used in the space image as a weight.

8. The apparatus of claim 7, wherein the calculating the color combination element value includes calculating the color combination element value by applying a weighted arithmetic mean to a two-dimensional element value of each of the first colors using a ratio derived when converting a sum of ratios used in each of the first colors in the space image to 100% as a weight for each of the first colors.

9. The apparatus of claim 8, wherein the calculating the color combination element value includes calculating the color combination element value using Equation 1 below:

[Equation 1]

$$S_{av} = \sum_{k=1}^{N} \frac{a_k \times S_k}{100} \ (a_1 + a_2 + ... + a_n = 100)$$

$$D_{av} = \sum_{k=1}^{N} \frac{a_k \times D_k}{100} \ (a_1 + a_2 + ... + a_n = 100)$$

where N = number of first colors, a = ratio of using one first color when converting the sum of ratios of N first colors used in a space image to 100%, S: soft element value, D: dynamic element value, $S_{av}$: weighted arithmetic mean element value for soft values of first colors, and $D_{av}$: weighted arithmetic mean element value for dynamic values of first colors.

10. A method of recommending a color combination based on analysis of a space image performed by an apparatus for recommending a color combination based on analysis of a space image, the method comprising:

receiving a space image;
determining a type of a color configuring the space image and a ratio in which the type of the color is used in the space image;
selecting a first color as a part of the color configuring the space image in order of increasing the ratio of the color used in the space image;

determining an element value in which each of the first colors is positioned on a predetermined color image scale using soft and dynamic elements;

calculating a combined color combination element value by weighting the element value of each of the first colors using the ratio of each of the first colors used in the space image as a weight; and

recommending a color combination group including a color combination element value on the color image scale as a color combination suitable for a space image.

11. A computer readable recording medium for causing a processor to perform the method of claim 10.

Fig.1

| Space Classification | Object Detection | Preference Analysis | Product Recommendation |

Report

Main Style is nordic probability of 97.78%
Sub Style is natural probability of 2.07%

Color
Proportion
(Top 5)

Fig.2

Fig.3

Fig.4

Fig.5

Fig.6

Fig.7

```
                    ( START )
                        │
                        ▼
┌──────────────────────────────────────────┐
│           INPUT SPACE IMAGE              │ ~S710
└──────────────────────────────────────────┘
                        │
                        ▼
┌──────────────────────────────────────────┐
│     DETERMINE COLOR CONFIGURING SPACE    │ ~S720
│     IMAGE AND RATIO OF USING EACH COLOR  │
└──────────────────────────────────────────┘
                        │
                        ▼
┌──────────────────────────────────────────┐
│         SELECT FIRST AS PART OF COLORS   │
│ CONFIGURING SPACE IMAGE IN ORDER OF INCREASING │ ~S730
│      RATIO OF COLORS USED IN SPACE IMAGE │
└──────────────────────────────────────────┘
                        │
                        ▼
┌──────────────────────────────────────────┐
│   DETERMINE ELEMENT VALUE IN WHICH EACH FIRST │
│   COLOR IS POSITION ON COLOR IMAGE SCALE USING │ ~S740
│        SOFT AND DYNAMIC ELEMENTS         │
└──────────────────────────────────────────┘
                        │
                        ▼
┌──────────────────────────────────────────┐
│ CALCULATE COMBINED COLOR COMBINATION ELEMENT │
│ VALUE BY WEIGHTING ELEMENT VALUE OF EACH FIRST │ ~S750
│   COLOR USING RATIO OF EACH FIRST COLOR  │
│       USED IN SPACE IMAGE AS WEIGHT      │
└──────────────────────────────────────────┘
                        │
                        ▼
┌──────────────────────────────────────────┐
│    RECOMMEND COLOR COMBINATION GROUP     │
│ INCLUDING COLOR COMBINATION ELEMENT VALUE │ ~S760
│ ON COLOR IMAGE SCALE AS COLOR COMBINATION │
│        SUITABLE FOR SPACE IMAGE          │
└──────────────────────────────────────────┘
                        │
                        ▼
                    ( END )
```

## INTERNATIONAL SEARCH REPORT

| | |
|---|---|
| | International application No. |
| | **PCT/KR2021/009428** |

**A. CLASSIFICATION OF SUBJECT MATTER**

**G06Q 30/06**(2012.01)i; **G06F 16/535**(2019.01)i; **G06F 16/9535**(2019.01)i; **G06F 16/538**(2019.01)i; **G06T 7/90**(2017.01)i; **G06T 11/00**(2006.01)i

According to International Patent Classification (IPC) or to both national classification and IPC

**B. FIELDS SEARCHED**

Minimum documentation searched (classification system followed by classification symbols)

G06Q 30/06(2012.01); G06Q 10/10(2012.01); G06T 11/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공간 이미지(spatial/space image), 분석(analysis), 배색(color arrangement/combination/matching), 비율(ratio), 원소값(element value)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0030379 A (INDUSTRY-ACADEMIC COOPERATION FOUNDATION GYEONGSANG NATIONAL UNIVERSITY) 20 March 2020 (2020-03-20)<br>See paragraphs [0009]-[0014], [0043], [0047] and [0050]-[0056]; claim 1; and figure 1. | 1-11 |
| Y | WO 2014-037982 A1 (NIPPON COLOR & DESIGN RESEARCH INSTITUTE INC.) 13 March 2014 (2014-03-13)<br>See paragraphs [0061], [0075] and [0154]-[0165]; and figure 9. | 1-11 |
| Y | KR 10-2020-0065684 A (CAFE24 CORP.) 09 June 2020 (2020-06-09)<br>See paragraphs [0150] and [0159]; and figure 12. | 1-11 |
| Y | 허룡 등. 이미지 검색 엔진 기반 색채 리서치 도구 – 고바야시 컬러 이미지 스케일과 비교. 디지털콘텐츠학회논문지(J.DCS). vol. 20, no. 8, pp. 1625-1634, August 2019. (XU, Long et al. A Color Research System based on Image Search Engine - Compare with Kobayashi Color Image Scale. J.DCS.).<br>See pages 1629-1630; and figure 9. | 2-3 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **04 November 2021** | **04 November 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/009428**

C. DOCUMENTS CONSIDERED TO BE RELEVANT

| Category* | Citation of document, with indication, where appropriate, of the relevant passages | Relevant to claim No. |
|---|---|---|
| PX | KR 10-2234614 B1 (URBANBASE INC.) 01 April 2021 (2021-04-01)<br>See paragraphs [0052]-[0055]; claims 1 and 3-11; and figure 3.<br>* This document is a published earlier application that serves as a basis for claiming priority of the present international application. | 1-11 |

Form PCT/ISA/210 (second sheet) (July 2019)

| INTERNATIONAL SEARCH REPORT | | International application No. |
| --- | --- | --- |
| Information on patent family members | | PCT/KR2021/009428 |

| Patent document cited in search report | | | Publication date (day/month/year) | Patent family member(s) | | | Publication date (day/month/year) |
| --- | --- | --- | --- | --- | --- | --- | --- |
| KR | 10-2020-0030379 | A | 20 March 2020 | None | | | |
| WO | 2014-037982 | A1 | 13 March 2014 | JP | WO2014-037982 | A1 | 08 August 2016 |
| KR | 10-2020-0065684 | A | 09 June 2020 | KR | 10-2198545 | B1 | 06 January 2021 |
| KR | 10-2234614 | B1 | 01 April 2021 | None | | | |

Form PCT/ISA/210 (patent family annex) (July 2019)